# EUROPÄISCHE PATENTSCHRIFT

(11) **EP 2 107 255 B1**
(45) Veröffentlichungstag und Bekanntmachung des Hinweises auf die Patenterteilung: **21.09.2011**
(21) Anmeldenummer: 08006334.0
(22) Anmeldetag: 31.03.2008
(51) Int. Cl.: F15B 15/22, F16J 15/32

(54) **Endlagengedämpfter Pneumatikzylinder**
Pneumatic cylinder with cushioned end stroke
Vérin pneumatique à fin de course amortie

(43) Veröffentlichungstag der Anmeldung: 07.10.2009
(73) Patentinhaber: Carl Freudenberg KG, 69469 Weinheim (DE)
(72) Erfinder: Barillas, Gonzalo, 26204 Alsfeld (DE); Wüstenhagen, Ulrich, 34613 Schwalmstadt (DE)

(56) Entgegenhaltungen:
- EP-A- 0 525 290
- EP-A- 1 574 722
- WO-A-90/14520

## Beschreibung

### Technisches Gebiet

Die Erfindung betrifft einen endlagengedämpften Pneumatikzylinder mit einem Kolben, der wenigstens mit einer zentralen Aufnahme versehen ist, die bei Erreichen einer Endlage des Kolbens einen am Deckel des Zylinders angeordneten Dämpfungszapfen aufnehmen kann.

Bei Pneumatikzylindern ist neben der Abdichtung des Kolbens gegenüber der Zylinderwand es wünschenswert, wenn der Kolben bei Erreichen seiner Endlage gedämpft wird, so dass ein heftiger Anschlag des Kolbens am Zylinderdeckel vermieden wird.

### Stand der Technik

Aus der EP 1 447 571 B1 ist beispielsweise ein endlagengedämpfter Pneumatikzylinder bekannt geworden, der mit am Kolben angebrachten Dichtelementen versehen ist, die eine Abdichtung gegenüber dem Zylinder ergeben. Außerdem sind Anschlagelemente vorhanden, welche die Geschwindigkeit des Kolbens kurz vor Erreichen der Endlagenposition abbremsen.

Bekannt sind auch doppelt wirkende Zylinder, welche in ihren Deckeln Aufnahmen haben, in welche am Kolben angebrachte Dämpfungszapfen eintauchen, wenn der Kolben seine Endlage erreicht. Die Aufnahmen sind mit Dichtungen versehen, welche am Umfang der Zapfen zur Anlage gelangen. Durch den in der Aufnahme sich aufbauenden Druck wird der Kolben abgebremst. Außerdem sind im Zylinder selbst noch Dämpfungsringe eingesetzt, an welche die Oberfläche des Kolbens zur Anlage gelangt. Im Kolben sind Ringdichtungen vorhanden, die eine Abdichtung des Kolbens gegenüber der Innenwand des Zylinders ergeben.

Durch die WO 90/14520A ist ein endlagengedämpfter Pneumatikzylinder mit einem Kolben bekannt, der mit einer zentralen Aufnahme versehen ist,die bei Erreichen einer Endlage des Kolbens einen amDeckel des Zylinders angeordneten Dämpfungszapfen aufnehmen kann, wobei der Kolben an seiner freien Stirnseite mit einem elastomeren Aufsatz versehen ist, der eine erste dynamische Dichtung gegenüber der Zylinderinnenwand und eine zweite dynamische Dichtung gegenüber der Zapfenaußenwand hat.

Schließlich sind auch noch Pneumatikzylinder bekannt, bei denen die Kolben zwei zentrale Aufnahmen haben und bei denen die darin einzuführenden Zapfen an den Deckeln des Zylinders angebracht sind. Dieses wird bei kolbenstangenlosen Zylindern verwendet, bei denen eine Art fliegender Kolben vorhanden ist, der an jeder Stirnseite mit der zentralen Aufnahme versehen ist und jeder Zylinderdeckel mit einem entsprechenden Zapfen ausgerüstet ist. Der Kolben bewegt sich in einem längs der Achse geschlitzten Zylinderrohr in der einen oder anderen Richtung. Der Endanschlag des Kolbens wird jeweils pneumatisch gedämpft. In der Mitte des Zapfens ist eine Bohrung enthalten, durch welche die Luft aus dem Zylinderraum entweichen kann, wenn der Kolben sich auf den Zapfen zubewegt. Kurz vor dem Ende des Hubs des Kolbens gelangt eine an der Aufnahme des Kolbens vorhandene Dämpfungsdichtung mit ihrer Dichtlippe auf die Außenwand des Dämpfungszapfens, wodurch der Luftabfluss abgesperrt wird. Die Luft kann nicht mehr durch die Bohrung des Zapfens und den Deckel aus dem Zylinderraum entweichen sondern wird durch die anhaltende Bewegung des Kolbens in dem Raum zwischen Zapfen und Zylinderwand komprimiert. Hierdurch entsteht eine Dämpfung der Kolbenbewegung. Um die Dämpfungsdichtung am Kolben zu halten ist eine Haltescheibe vorgesehen, die am Kolben befestigt ist. Auch ein Hinterschnitt am Kolben kann zur Aufnahme der Dichtung ausgebildet sein. Neben der vorgenannten Dichtung für den Dämpfungszapfen ist der Kolben mit einer eigenen Dichtung gegenüber der Zylinderwand ausgestattet.

### Darstellung der Erfindung

Der Erfindung liegt die Aufgabe zugrunde, bei einem endlagengedämpften Pneumatikzylinder eine Vereinfachung zu erreichen, so dass derselbe mit möglichst geringem Aufwand hergestellt werden kann. Dabei soll jedoch gleichzeitig eine sichere Wirkungsweise bei der Endlagendämpfung beibehalten werden. Die Verbesserung soll in ersten Linie bei kolbenstangenlosen Zylindern verwendbar sein, bei denen Dämpfungszapfen an den Zylinderdeckeln angeordnet sind und der Kolben an seinen Stirnseiten zentrale Aufnahmen für die Dämpfungszapfen hat.

Die Lösung der gestellten Aufgabe erfolgt mit den Merkmalen des Anspruchs 1. Die Unteransprüche 2 bis 9 stellen vorteilhafte Ausgestaltungen des Erfindungsgegenstandes dar.

Das Haupteinsatzgebiet der vorliegenden Erfindung sind kolbenstangenlose Zylinder, bei denen der Kolben auf jeder seiner Stirnseiten jeweils mit einer zentralen Aufnahme versehen ist, die bei Erreichen einer Endlage des Kolbens den jeweiligen, am betroffenen Deckel des Zylinders angeordneten Dämpfungszapfen aufnehmen kann. Möglich ist aber auch die Anwendung bei Pneumatikzylindern, bei denen der Kolben an einer Kolbenstange geführt ist, wobei in diesem Fall der Kolben nur an einer seiner Stirnseiten die zentrale Aufnahme hat.

Bei einem endiagengedämpften Pneumatikzylinder der eingangs genannten Art wird der Kolben an seinen Stirnseiten mit elastomeren Aufsätzen versehen, welche eine erste dynamische Dichtung gegenüber der Zylinderinnenwand und eine zweite dynamische Dichtung gegenüber der Zapfenaußenwand aufweisen. Sowohl für die Kolbendichtung gegenüber der Zylinderinnenwand als auch der Dichtung gegenüber der Zapfenaußenwand wird lediglich ein einziges Dichtungselement verwendet, welches beide Aufgaben, nämlich die dynamische Dichtung gegenüber der Zylinderinnenwand und die dynamische Dichtung gegenüber der Zapfenaußenwand erfüllen kann. Gesonderte Dichtungen für den jeweiligen Zweck sind hiernach nicht mehr erforderlich. Besonders vorteilhaft ist es jedoch, wenn zwischen der ersten und der zweiten Dichtung an dem elastomeren Element ein Bereich gebildet wird, der als Dämpfungselement dient und der zur Wirkung kommt, wenn der Kolben seine jeweilige Endlage erreicht hat. Auf diese Weise wird ein Bauteil gebildet, welches zwei dynamische Dichtungen und ein Dämpfungselement hat. Für die beiden dynamischen Dichtungen und auch für die Dämpfung des Kolbens ist somit lediglich ein einzelnes Bauteil erforderlich.

Für die Befestigung des Bauteils am Kolben wird der Kolben stirnseitig mit einem den Aufsatz aufnehmenden Vorsprung versehen und an dessen Außenwand eine Wulst angebracht. Der Aufsatz selbst wird mit einem ausgebildeten Innenraum versehen, der dem Vorsprung am Kolben entspricht und der eine Hinterschneidung für den Wulst am Vorsprung hat. Der Aufsatz wird auf den Vorsprung aufgesetzt und darauf aufgedrückt, so dass der Wulst in die Hinterschneidung eingreift und den Aufsatz am Kolben hält.

Die Dichtungen können in an sich bekannter Weise Dichtlippen aufweisen. Durch den Vorsprung am Kolben erhalten die Dichtungen eine feste Stütze, so dass sie in ihrer jeweiligen axialen Lage sicher gehalten werden. Um die Dichtfunktion gegenüber dem den Schlitzspalt des Zylinders überdeckenden Dichtband zu erfüllen, sind die Dichtlippen in diesem Dichtbereich so ausgebildet, dass eine verstärkte Anpressung vorliegt. Die Dichtlippen sind rilliert und die Dichtung hat eine in Umfangsrichtung positionierende Ausformung.

Erfindungsgemäß wird die zweite an der Zapfenaußenwand anliegende Dichtung an einem axial nach innen gerichteten Stutzenteil des Aufsatzes angeordnet. Dieses Stutzenteil ist zusätzlich mit axial verlaufenden Durchlassbohrungen versehen, durch die eine Belüftung des Zylinderinnenraums beim Anfahren ermöglicht wird, die jedoch bei der Endlagendämpfung selbst versperrt sind, indem der elastomere Stutzenteil an einer Ringfläche des Vorsprungs angedrückt wird, so dass die Öffnung der Durchlassbohrung verschlossen wird.

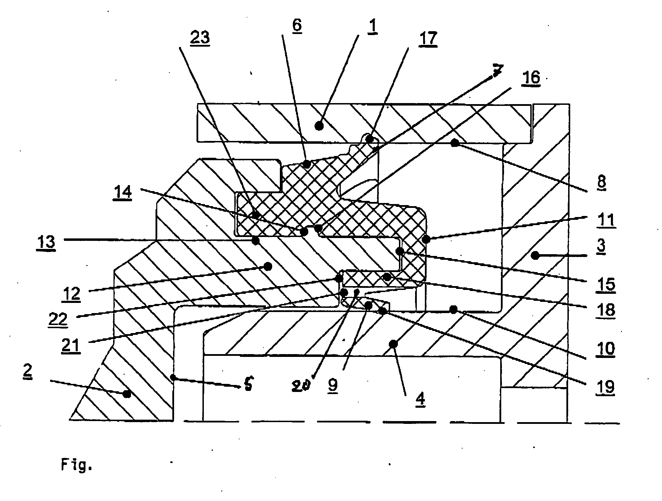

### Kurzbeschreibung der Zeichnung

Anhand eines in der Zeichnung schematisch dargestellten Ausführungsbeispiels wird die Erfindung nachstehend näher erläutert.

### Ausführung der Erfindung

In der beiliegenden Zeichnung sind lediglich ein Endteil des Pneumatikzylinders 1 und des Kolbens 2 im Schnitt gezeigt, wobei nur der obere Teil wiedergegeben ist. Am Deckel 3 des Zylinders 1 ist der Dämpfungszapfen 4 angeordnet. Der Kolben 2 hat an seiner Stirnseite 5 den elastomeren Aufsatz 6. Der Aufsatz 6 ist über die Positionierungsnocke 23 unverdrehbar auf der Stirnseite 5 des Kolbens 2 gehalten. Er hat die erste dynamische Dichtung 7, mit der er an der Zylinderinnenwand 8 anliegt und die zweite dynamische Dichtung 9, welche in Endlage des Kolbens 2 an der Zapfenaußenwand 10 zur Anlage kommt. Zwischen der ersten und zweiten Dichtung 7, 9 ist ein Bereich 11 vorhanden, welcher ein Dämpfungselement darstellt. Dieser Bereich 11 ist integrales Teil des Aufsatzes 6. Der Kolben 2 hat stirnseitig den Vorsprung 12, dessen Außenwand 13 mit dem Wulst 14 versehen ist. Der Aufsatz 6 seinerseits hat den Innenraum 15 und ist auf der der Dichtung 7 zugewandten Seite mit der Hinterschneidung 16 für den Wulst 14 versehen. Die Dichtungen 7 und 9 sind mit den Dichtlippen 17 und 19 ausgebildet. Beide Dichtungen 7 und 9 werden durch den Vorsprung 12 abgestützt. Dieses ist besonders günstig für die zweite Dichtung 9, die an einem axial nach innen gerichteten Stutzenteil 18 des Aufsatzes 6 angeordnet ist. Der Stutzenteil 18 ist mit axial verlaufenden Durchlassbohrungen 20 ausgestattet. Zwischen der Öffnung 21 der Bohrung 20 und der Anschlagfläche 22 am Vorsprung 12 ist ein geringfügiger Abstand vorgesehen, so dass die Druckluft in den Zylinderraum bei nicht vorhandener Endlagendämpfung gelangen kann. Die Anschlagfläche 22 hat eine umlaufende Ringform.

Die vorliegende Erfindung ist besonders vorteilhaft bei Zylindern mit einer Längsauftrennung anwendbar. Ein derartiger Zylinder ist in der EP 0 525 290 B1 dargestellt.

## Patentansprüche

1. Endlagengedämpfter Pneumatikzylinder (1) mit einem Kolben (2), der wenigstens mit einer zentralen Aufnahme versehen ist, die bei Erreichen einer Endlage des Kolbens (2) einen am Deckel (3) des Zylinders (1) angeordneten Dämpfungszapfen (4) aufnehmen kann, wobei der Kolben (2) an seiner freien Stirnseite (5) mit einem elastomeren Aufsatz (6) versehen ist, der eine erste dynamische Dichtung (7) gegenüber der Zylinderinnenwand (8), und eine zweite dynamische Dichtung (9) gegenüber der Zapfenaußenwand (10) hat, **dadurch gekennzeichnet, dass** die zweite Dichtung (9) an einem axial nach innen gerichteten Stutzenteil (18) des Aufsatzes (6) angeordnet ist und das Stutzenteil (18) axial verlaufende Durchlassbohrungen (20) hat, die bei der Endlagendämpfung versperrt sind.

2. Endlagengedämpfter Pneumatikzylinder nach Anspruch 1, **dadurch gekennzeichnet, dass** der zwischen der ersten und zweiten Dichtung liegende Bereich (11) des Aufsatzes (6) als Dämpfungselement ausgebildet ist.

3. Endlagengedämpfter Pneumatikzylinder nach Anspruch 1 oder 2, **dadurch gekennzeichnet, dass** der Kolben (2) stirnseitig einen den Aufsatz (2) aufnehmenden Vorsprung (12) hat, dessen Außenwand (13) eine Wulst (14) aufweist und der Aufsatz (6) mit einem dem Vorsprung (12) entsprechenden ausgebildeten Innenraum (15) versehen ist, der eine Hinterschneidung für den Wulst (14) hat.

4. Endlagengedämpfter Pneumatikzylinder nach einem der Ansprüche 1 bis 3, **dadurch gekennzeichnet, dass** die Dichtungen (7, 9) Dichtlippen (17, 19) haben.

5. Endlagengedämpfter Pneumatikzylinder nach einem der Ansprüche 1 bis 4, **dadurch gekennzeichnet, dass** die Dichtungen (7, 9) durch den Vorsprung (12) abgestützt sind.

6. Endlagengedämpfter Pneumatikzylinder nach einem der Ansprüche 1 bis 5, **dadurch gekennzeichnet, dass** der den Kolben (2) aufnehmende Zylinder (1) eine Längsauftrennung hat, die durch ein Dichtband überdeckt ist.

7. Endlagengedämpfter Pneumatikzylinder nach einem der Ansprüche 1 bis 6, **dadurch gekennzeichnet, dass** der Aufsatz (6) durch eine Verdrehsicherung (23) unverdrehbar auf dem Kolben (2) festgelegt ist.

8. Endlagengedämpfter Pneumatikzylinder nach einem der Ansprüche 1 bis 7, **dadurch gekennzeichnet, dass** die an der Zylinderinnenwand (8) anliegende Dichtung (7) auf ihrer Außenseite mit einer Rillierung zur Aufnahme von Schmiermittel versehen ist.

9. Endlagengedämpfter Pneumatikzylinder nach einem der Ansprüche 1 bis 8, **dadurch gekennzeichnet, dass** der Aufsatz (6) im Bereich des Dichtbandes am Zylinder (1) eine Verstärkung hat, die eine vergrößerte Anpressung der Dichtlippe (17) am Zylinder (1) bewirkt.

## Claims

1. End-position-damped pneumatic cylinder (1) having a piston (2) which is provided at least with a central receptacle which, on reaching an end position of the piston (2), can receive a damping pin (4) arranged on the cover (3) of the cylinder (1), wherein the piston (2) is provided on its free end face (5) with an elastomeric attachment (6) which has a first dynamic seal (7) with respect to the cylinder inner wall (8), and a second dynamic seal (9) with respect to the pin outer wall (10), **characterized in that** the second seal (9) is arranged on an axially inwardly directed stub part (18) of the attachment (6) and the stub part (18) has axially extending through-holes (20) which are blocked during the end-position damping.

2. End-position-damped pneumatic cylinder (1) according to Claim 1, **characterized in that** the region (11) of the attachment (6) that is situated between the first and second seals is formed as a damping element.

3. End-position-damped pneumatic cylinder according to Claim 1 or 2, **characterized in that** the piston (2) has on its end face a projection (12) which receives the attachment (2) and whose outer wall (13) has a bead (14), and the attachment (6) is provided with an inner space (15) which is formed corresponding to the projection (12) and which has an undercut for the bead (14).

4. End-position-damped pneumatic cylinder according to one of Claims 1 to 3, **characterized in that** the seals (7, 9) have sealing lips (17, 19).

5. End-position-damped pneumatic cylinder according to one of Claims 1 to 4, **characterized in that** the seals (7, 9) are supported by the projection (12).

6. End-position-damped pneumatic cylinder according to one of Claims 1 to 5, **characterized in that** the cylinder (1) receiving the piston (2) has a longitudinal split which is covered by a sealing strip.

7. End-position-damped pneumatic cylinder according to one of Claims 1 to 6, **characterized in that** the attachment (6) is fixed non-rotatably to the piston (2) by an anti-rotation means (23).

8. End-position-damped pneumatic cylinder according to one of Claims 1 to 7, **characterized in that** the seal (7) bearing on the cylinder inner wall (8) is provided on its outer side with a grooving for receiving lubricant.

9. End-position-damped pneumatic cylinder according to one of Claims 1 to 8, **characterized in that**, in the region of the sealing strip on the cylinder (1), the attachment (6) has a reinforcement which produces increased pressing of the sealing lip (17) against the cylinder (1).

## Revendications

1. Vérin pneumatique (1) amorti en position finale comprenant un piston (2), qui est doté d'au moins un logement central, lequel peut recevoir, lorsqu'une position finale du piston (2) est atteinte, un tenon d'amortissement (4) disposé sur le couvercle (3) du vérin (1), le piston (2) étant doté sur son côté frontal (5) libre d'un chapeau (6) élastomère, qui a un premier joint (7) dynamique en face de la paroi intérieure du vérin (8), et un second joint (9) dynamique en face de la paroi extérieure du tenon (10), **caractérisé en ce que** le second joint (9) est disposé sur une partie de tubulure (18), dirigée axialement vers l'intérieur, du chapeau (6) et la partie de tubulure (18) a des trous de passage (20) agencés axialement qui sont bloqués lors de l'amortissement en position finale.

2. Vérin pneumatique amorti en position finale selon la revendication 1, **caractérisé en ce que** la zone (11), située entre le premier et le second joint, du chapeau (6) est conçue comme élément d'amortissement.

3. vérin pneumatique amorti en position finale selon la revendication 1 ou 2, **caractérisé en ce que** le piston (2) a du côté avant une saillie (12) recevant le chapeau (2), dont la paroi extérieure (13) présente un renflement (14) et le chapeau (6) est doté d'un espace intérieur (15) conçu de manière à correspondre à la saillie (12), qui a une contre-dépouille pour le renflement (14).

4. Vérin pneumatique amorti en position finale selon l'une quelconque des revendications 1 à 3, **caractérisé en ce que** les joints (7, 9) ont des lèvres d'étanchéité (17, 19).

5. Vérin pneumatique amorti en position finale selon l'une quelconque des revendications 1 à 4, **caractérisé en ce que** les joints (7, 9) sont soutenus par la saillie (12).

6. Vérin pneumatique amorti en position finale selon l'une quelconque des revendications 1 à 5, **caractérisé en ce que** le vérin (1) recevant le piston (2) a un sectionnement longitudinal qui est recouvert par une bande étanche.

7. Vérin pneumatique amorti en position finale selon l'une quelconque des revendications 1 à 6, **caractérisé en ce que** le chapeau (6) est fixé par un blocage en rotation (23) de façon non rotative sur le piston (2).

8. Vérin pneumatique amorti en position finale selon l'une quelconque des revendications 1 à 7, **caractérisé en ce que** le joint (7) s'appliquant sur la paroi intérieure du vérin (8) est doté sur son côté extérieur d'un rainurage pour recevoir du lubrifiant.

9. Vérin pneumatique amorti en position finale selon l'une quelconque des revendications 1 à 8, **caractérisé en ce que** le chapeau (6) a dans la zone de la bande étanche sur le vérin (1) un renfort qui entraîne une compression augmentée de la lèvre d'étanchéité (17) sur le vérin (1).
